# EUROPÄISCHE PATENTANMELDUNG

(11) **EP 3 244 075 A1**
(43) Veröffentlichungstag der Anmeldung: **15.11.2017**
(21) Anmeldenummer: 17163382.9
(22) Anmeldetag: 28.03.2017
(51) Int. Cl.: F16B 5/02

(54) **VORRICHTUNG ZUM FESTLEGEN AN EINEM BAUTEIL**

(30) Priorität: 12.05.2016 DE 102016208180
(71) Anmelder: Springfix Befestigungstechnik GmbH, 73084 Salach (DE)
(72) Erfinder: Gonzalez, Carlos, 89558 Böhmenkirch (DE); Ecker, Rainer, 73033 Göppingen (DE); Bernauer, Jana, 73230 Kirchheim unter Teck (DE)
(74) Vertreter: Patent- und Rechtsanwälte Ullrich & Naumann

(57) **Zusammenfassung**

Eine Vorrichtung zum Festlegen an einem Bauteil, insbesondere ToleranzAusgleichs-Element, mit einer ersten Hülse (1) und einer an und/oder in der ersten Hülse (1) mittels einer Schraubverbindung festlegbaren zweiten Hülse (2), wobei die erste Hülse (1) und die zweite Hülse (2) jeweils einen Durchgang (6) aufweisen, wobei eine Schraube (3) durch die Durchgänge (6) und vorzugsweise durch das Bauteil hindurch in ein Gewinde eines Haltemittels (15) einschraubbar ist, wobei sich die Drehrichtung der Schraubverbindung von der Drehrichtung des Gewindes des Haltemittels (15) unterscheidet und wobei an der zweiten Hülse (2) eine mit der Schraube (3) zusammenwirkende Mitnahmeeinrichtung ausgebildet ist, ist dadurch gekennzeichnet, dass die Mitnahmeeinrichtung durch mindestens ein in den Durchgang (6) hineinragendes Gewindeelement (7) und mindestens ein, vorzugsweise in Axialrichtung dazu versetzt angeordnetes, sich in den Durchgang (6) erstreckendes Blockierungsmittel (8) realisiert ist.

## Beschreibung

Die Erfindung betrifft eine Vorrichtung zum Festlegen an einem Bauteil, insbesondere Toleranz-Ausgleichs-Element, mit einer ersten Hülse und einer an und/oder in der ersten Hülse mittels einer Schraubverbindung festlegbaren zweiten Hülse, wobei die erste Hülse und die zweite Hülse jeweils einen Durchgang aufweisen, wobei eine Schraube durch die Durchgänge und vorzugsweise durch das Bauteil hindurch in ein Gewinde eines Haltemittels einschraubbar ist, wobei sich die Drehrichtung der Schraubverbindung von der Drehrichtung des Gewindes des Haltemittels unterscheidet und wobei an der zweiten Hülse eine mit der Schraube zusammenwirkende Mitnahmeeinrichtung ausgebildet ist.

Vorrichtungen der in Rede stehenden Art sind seit Jahren aus der Praxis bekannt und dienen beispielsweise der Fixierung von zwei Bauteilen, deren Abstand zueinander schwanken kann. Entsprechende Toleranz-Ausgleichs-Elemente werden beispielsweise zur Montage von Schweinwerfern in einem Kraftfahrzeug verwendet.

Bei den bekannten Vorrichtungen wird mit dem Eindrehen der Schraube in das Gewinde des Haltemittels die zweite Hülse aufgrund des Reibelements, das die Schraube und die zweite Hülse verbindet, ebenfalls gedreht. Das Reibeelement ist dabei als Federstahlklemme ausgebildet, die gegen die eingesteckte Schraube drückt. Durch die gegensinnige Drehrichtung der Schraubverbindung und des Gewindes des Haltemittels wird mit dem Eindrehen der Schraube die zweite Hülse aus der ersten Hülse herausgeschraubt. Somit ermöglicht diese Konstruktion einen Toleranzausgleich bei der Fixierung von zwei Bauteilen, deren Abstand zueinander nicht eindeutig bestimmt ist.

Entsprechende Vorrichtungen sind beispielsweise aus der FR 2 792 039 B1 und der DE 100 34 968 A1 vorbekannt.

Bei den gattungsbildenden Vorrichtungen ist problematisch, dass die kraftschlüssige Verbindung zwischen dem als Federstahlklemme ausgebildeten Reibelement und der Schraube durch Verschmutzungen und Schmiermittel sowie einer Variation des Außendurchmessers der Schraube mitunter stark beeinflusst wird. Daher ist das Drehmoment, bei welchem das Reibelement mit der Schraube kraftschlüssig verbunden ist und somit die aufschraubende Kraft des Toleranz-Ausgleichs-Elements nur unzureichend einstellbar, so dass die Vorspannung der zu befestigenden Bauteile von Baugruppe zu Baugruppe stark variiert.

Der vorliegenden Erfindung liegt daher die Aufgabe zugrunde, eine Vorrichtung zum Festlegen an einem Bauteil, insbesondere ein Toleranz-Ausgleichs-Element, der eingangs genannten Art derart auszugestalten und weiterzubilden, dass mit konstruktiv einfachen Mitteln eine definierbare Vorspannung zwischen den zu befestigenden Bauteilen realisierbar ist.

Erfindungsgemäß wird die voranstehende Aufgabe durch die Merkmale des Anspruchs 1 gelöst. Danach ist die in Rede stehende Vorrichtung zum Festlegen an einem Bauteil dadurch gekennzeichnet, dass die Mitnahmeeinrichtung durch mindestens ein in den Durchgang hineinragendes Gewindeelement und mindestens ein, vorzugsweise in Axialrichtung dazu versetzt angeordnetes, sich in den Durchgang erstreckendes Blockierungsmittel realisiert ist.

In erfindungsgemäßer Weise ist erkannt worden, dass die zugrunde liegende Aufgabe in verblüffend einfacher Weise durch eine geschickte Ausgestaltung der Mitnahmeeinrichtung gelöst werden kann. Im Konkreten ist die Mitnahmeeinrichtung durch mindestens ein, vorzugsweise radial, in dem Durchgang hineinragendes Gewindeelement und mindestens ein, vorzugsweise in Axialrichtung dazu versetzt angeordnetes, sich insbesondere radial in den Durchgang erstreckendes Blockierungsmittel realisiert. Das Gewindeelement wirkt beim Einstecken der Schraube zunächst als Anschlag. Sobald die eingesteckte Schraube gedreht wird, bewegt sie sich in Axialrichtung, bis sie an das Blockierungsmittel anstößt. Das Blockierungsmittel verhindert eine Verschiebung der Schraube in Axialrichtung, wobei die Schraube durch das weitere Drehen zwischen dem Gewindeelement und dem Blockierungsmittel fixiert wird, so dass das Gewindeelement und das Blockierungsmittel als Mitnahmeeinrichtung wirken. Dadurch wird die zweite Hülse aus der ersten Hülse herausgedreht und somit die beiden Bauteile miteinander verspannt. Dabei erhöht sich der Ausschraubwiderstand und somit die auf das Blockierungsmittel wirkende Kraft bzw. das wirkende Drehmoment, wenn die Hülsen an dem Bauteil anliegen. Mit Erreichen des gewünschten axialen Ausfahrwegs der zweiten Hülse aus der ersten Hülse ist die durch die Schraube auf das Blockierungsmittel wirkende Kraft bzw. das wirkende Drehmoment so groß, dass das Blockierungsmittel bricht und/oder weggebogen wird, d.h. seine Sperrung aufgibt. Sodann kann die Schraube in Axialrichtung weiter eingebracht werden, bis sie in das Gewinde des Haltemittels eingreift und dort verschraubt wird. Folglich kann bspw. über die Dimensionierung und/oder die Geometrie und/oder das Material des Blockierungsmittels definiert werden, bei welcher Kraft bzw. bei welchem Drehmoment das Blockierungsmittel bricht bzw. weggebogen wird. Folglich kann somit auch die durch die Vorrichtung zwischen zwei Bauteilen auftretende Vorspannung definiert werden.

Durch die erfindungsgemäße Mitnahmeeinrichtung ist eine Mitnahmeeinrichtung realisiert, die durch äußere Einflüsse wie Verschmutzungen und Schmiermittel sowie eine Variation des Außendurchmessers der Schraube nur geringfügig beeinflusst wird. Ein weiterer Vorteil besteht darin, dass die Vorrichtung äußerst einfach konstruiert und somit preiswert in der Herstellung ist.

Dabei ist denkbar, dass die erste Hülse und die zweite Hülse jeweils mindestens zwei Gewinde zum gegenseitigen Eingriff der Hülsen, nämlich zum Realisieren der Schraubverbindung aufweisen. Beispielsweise können jeweils ein Schraubgewinde (Außengewinde) einer Hülse und ein Mutterngewinde (Innengewinde) der anderen Hülse ein Gewindepaar bilden, so dass die erste Hülse und die zweite Hülse über mindestens zwei Gewindepaare miteinander verbunden sind. Die Gewinde können dabei beispielsweise als Gewinde eines Linksgewindes ausgebildet sein, so dass das Gewinde des Haltemittels als Rechtsgewinde ausgebildet ist und die Schraube in üblicher Weise in das Haltemittel eindrehbar ist. Durch diese Konstruktion verteilen sich die auf die Hülsen wirkenden Kräfte und Drehmomente auf mehrere Gewinde bzw. Gewindepaare, so dass die einzelnen Gewinde für sich gesehen einer geringeren Kraft widerstehen müssen. Dadurch ist es möglich, die Hülsen aus einer Vielzahl von Materialien herzustellen, die bisher für die Herstellung solcher Vorrichtungen nicht in Frage kamen. Des Weiteren ist erkannt worden, dass durch eine solche Konstruktion die gesamte Vorrichtung äußerst kompakt und klein baut, da auf ein entsprechend groß dimensioniertes Gewinde verzichtet werden kann.

In vorteilhafter Weise kann das Gewindeelement der Mitnahmeeinrichtung als Gegengewinde für das Gewinde der Schraube ausgebildet sein. Beispielsweise kann das Gegengewinde als Trapezgewinde realisiert sein. Im Konkreten ist denkbar, dass das Gewindeelement als Nase bzw. Materialerhebung in und/oder an dem Durchgang der zweiten Hülse realisiert ist. Die Hülse und das Gewindeelement können dabei einteilig hergestellt sein.

In weiter vorteilhafter Weise kann das Blockierungsmittel, vorzugsweise radial, derart weit in den Durchgang hineinragen, dass die in den Durchgang eingebrachte Schraube radial und/oder axial an das Blockierungsmittel anstößt. Mit Erreichen einer definierbaren Kraft, welche die Schraube auf das Blockierungsmittel ausübt, kann das Blockierungsmittel abbrechen bzw. seine Sperrung aufgeben. Dabei kann das Blockierungsmittel als Nase beziehungsweise Materialerhebung in und/oder an den Durchgängen der zweiten Hülse realisiert sein. Sofern das Blockierungsmittel axial an die eingebrachte Schraube anstößt, kann das Blockierungsmittel als Gegengewinde für das Gewinde der Schraube ausgebildet sein, wobei das Gewindeelement und das Blockierungsmittel eine unterschiedliche Gewindesteigung aufweisen können, um ein Klemmen der Schraube zu erzwingen.

Des Weiteren ist denkbar, dass das Blockierungsmittel als den Durchgang zumindest teilweise verschließenden Membrane ausgebildet ist. Der Begriff "Membrane" ist im weitesten Sinne zu verstehen, umfasst insbesondere ein dünnes, flächiges Material, vorzugsweise das gleiche Material, aus dem die zweite Hülse hergestellt ist.

In besonders vorteilhafter Weise kann das Blockierungsmittel zumindest eine Sollbruchstelle aufweisen. Hierzu kann beispielsweise eine Materialschwächung an dem Blockierungsmittel ausgebildet sein. Sofern das Blockierungsmittel als Membrane realisiert ist, kann diese zumindest einfach geschlitzt ausgebildet sein, vorzugsweise mehrere Schlitze aufweisen, so dass die Membrane von der eingebrachten Schraube weggebrochen bzw. weggebogen werden kann, sofern eine entsprechend hohe Kraft auf die Membrane ausgeübt wird.

Um die Vorspannung, welche die Vorrichtung auf die zu befestigenden Bauteile ausübt, exakt einzustellen, können mehrere Blockierungsmittel und/oder mehrere Gewindeelemente vorgesehen sein. Im Konkreten können drei oder mehr Gewindeelemente in Umfangsrichtung versetzt zueinander angeordent sein. Werden drei Gewindeelemente realisiert, können diese bspw. im Abstand von 120° zueinander angeordnet sein. Dadurch wird eine Selbstzentrierung der Schraube beim Einbringen in den Durchgang bewirkt. Des Weiteren kann das Gewindeelement als vollständiger Gewindegang realisiert sein.

In weiter vorteilhafter Weise kann eine zwischen der ersten Hülse und der zweiten Hülse wirkende Verdrehsicherung angeordnet sein. Durch diese konstruktive Maßnahme kann die Vorrichtung in einem Soll-Lieferzustand gehalten werden, bei dem die Hülsen beispielsweise nahezu vollständig ineinander verschraubt sind. Je nach geometrischer Ausgestaltung und Material kann die Kraft bzw. das Drehmoment definiert werden, die zum Überwinden der Verdrehsicherung aufgebracht werden muss.

In besonders bevorzugter Weise kann an der ersten Hülse ein sich vorzugsweise radial in den Durchgang erstreckendes Bruchelement, beispielsweise eine Nase bzw. eine Materialerhebung, ausgebildet sein, wobei das Bruchelement zumindest einen Teil der Verdrehsicherung bildet. Dabei kann das Bruchelement in Axialrichtung gesehen zwischen dem Gewindeelement und dem Blockierungsmittel realisiert sein. Zusätzlich kann an der zweiten Hülse ein, vorzugsweise in den Durchgang hineinragendes, Widerlager ausgebildet sein, so dass das Bruchelement bei einem Verdrehen der Hülsen an das Widerlager anstößt und die Drehbewegung hemmt. Das Widerlager kann gabelförmig, insbesondere durch zwei Vorsprünge, realisiert sein, wobei die Vorsprünge das Bruchelement zwischen sich aufnehmen. Bei einer solchen Ausgestaltung kann das Widerlager durch ein entsprechend geformtes Blockierungsmittel gebildet sein, so dass das Blockierungsmittel eine Doppelfunktion erfüllt, nämlich als Teil der Verdrehsicherung und als Teil der Mitnahmeeinrichtung. Des Weiteren ist denkbar, dass das Bruchelement zwei Erhebungen aufweist, in die das Widerlager eingreift. Somit ist eine Drehbewegung in beide Richtungen unterbunden. Beim Einbringen der Schraube in den Durchgang wird diese somit zunächst durch das Gewindeelement gestoppt. Durch das Drehen der Schraube ist diese in Axialrichtung bewegbar, bis sie an das Bruchelement bzw. das Widerlager anstößt. Sofern bei einem Weiterdrehen der Schraube ein definiertes Drehmoment überschritten wird, bricht beziehungsweise verbiegt sich das Bruchelement bzw. das Widerlager derart, dass die Verdrehsicherung aufgelöst wird. Nachdem die Schraube das Bruchelement passiert hat, trifft sie auf das Blockierungsmittel, wozu auf die voranstehenden Ausführungen verwiesen wird. Dabei ist insbesondere denkbar, dass das Bruchelement und/oder das Widerlager in mehrere Teile zerbrechbar ausgebildet ist, so dass möglichst kleine Bruchstücke vorliegen, die bei der weiteren Montage nicht stören. Dazu kann das Bruchelement und/oder das Widerlager zumindest eine, bevorzugt mehrere, Sollbruchstellen aufweisen, beispielsweise Materialschwächungen.

Des Weiteren ist denkbar, dass die Verdrehsicherung als Klammer ausgebildet ist. Die Klammer kann einteilig mit der ersten Hülse oder der zweiten Hülse ausgestaltet sein und die erste Hülse und/oder die zweite Hülse umgreifen. Alternativ oder zusätzlich ist denkbar, dass die Klammer in die erste Hülse und/oder die zweite Hülse eingreift und von den Hülsen insbesondere händisch abgenommen bzw. gelöst werden.

In vorteilhafter Weise kann alternativ oder zusätzlich zu den voranstehend genannten Ausbildungen die erste Hülse mit der zweiten Hülse stoffschlüssig bzw. adhäsiv verbunden sein, beispielsweise über einen Klebstoff, um somit die Verdrehsicherung zu realisieren. In besonders vorteilhafter Weise kann es sich um einen Klebstoff handeln, bei welchem die Reib- und/oder Scherkraft derart angepasst ist, dass die Verdrehsicherung die Hülsen bei einem definierten Drehmoment freigibt. In vorteilhafter Weise kann der Klebstoff auf sich axial gegenüberliegenden Flächen der Hülsen aufgebracht sein. Weiterhin kann der Klebstoff zwischen den die Schraubverbindung bildenden Gewinden der ersten Hülse und der zweiten Hülse aufgebracht sein.

In weiter vorteilhafter Weise können die Gewinde der ersten und zweiten Hülse, die die Schraubverbindung realisieren, zumindest bereichsweise nicht miteinander korrespondieren, so dass die Verdrehsicherung über eine Gewindeklemmung verwirklicht ist. Vor der Auslieferung der Vorrichtung können die beiden Hülsen mit einem abgestimmten Drehmoment ineinander geschraubt werden, so dass die gewünschte Gewindeklemmung erzielt wird, durch welche die Verdrehsicherung realisiert ist.

Zur Realisierung einer Verdrehsicherung ist es weiterhin möglich, dass eine Anlagefläche der ersten Hülse und eine, insbesondere axial gegenüberliegende, Anlagefläche der zweiten Hülse zumindest bereichsweise kraftschlüssig miteinander verbunden sind, insbesondere verklemmt. Dazu können die Anlagefläche der ersten Hülse und/oder die Anlagefläche der zweiten Hülse aus einem Elastomer, insbesondere Gummi, bestehen und/oder Erhebungen oder Vertiefungen aufweisen. Durch ein ineinander Schrauben der beiden Hülsen kommen die Anlageflächen in Kontakt, so dass eine kraftschlüssige Verbindung erzeugt wird, die sich durch Aufbringen eines definierten Drehmoments bzw. einer definierten Kraft lösen lässt.

In weiter vorteilhafter Weise können die erste Hülse und die zweite Hülse - ggf. umfassend das einteilig mit der zweiten Hülse ausgebildete Gewindeelement und/oder Blockierungsmittel - aus einem thermoplastischen Kunststoff, beispielsweise im Spritzgussverfahren hergestellt sein. Dabei kann der thermoplastische Kunststoff in idealer Weise derart gewählt sein, dass eine gute Haftung mit einem thermoplastischen Elastomer gewährleistet ist. Durch die Realisierung von mehreren Gewinden in den Hülsen und die Herstellung der Hülsen aus thermoplastischem Kunststoff kann die Vorrichtung besonders kompakt und stabil ausgebildet und dabei kostengünstig in der Herstellung sein.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen, geschnitten Darstellung ein erstes Ausführungsbeispiel einer erfindungsgemäßen Vorrichtung,
- Fig. 2: in einer schematischen, perspektivischen Darstellung die erfindungsgemäße Vorrichtung gemäß Fig. 1,
- Fig. 3: in einer weiteren schematischen, geschnittenen Darstellung einen Ausschnitt der erfindungsgemäßen Vorrichtung gemäß Fig. 1,
- Fig. 4: in einer schematischen, geschnittenen Darstellung ein weiteres Ausführungsbeispiel einer erfindungsgemäßen Vorrichtung,
- Fig. 5: in einer schematischen, geschnittenen Darstellung ein weiteres Ausführungsbeispiel einer erfindungsgemäßen Vorrichtung,
- Fig. 6: in einer schematischen, geschnittenen Darstellung ein weiteres Ausführungsbeispiel einer erfindungsgemäßen Vorrichtung und
- Fig. 7: in einer schematischen, geschnittenen Darstellung drei verschiedene Ausgestaltungen der Verdrehsicherung einer erfindungsgemäßen Vorrichtung.

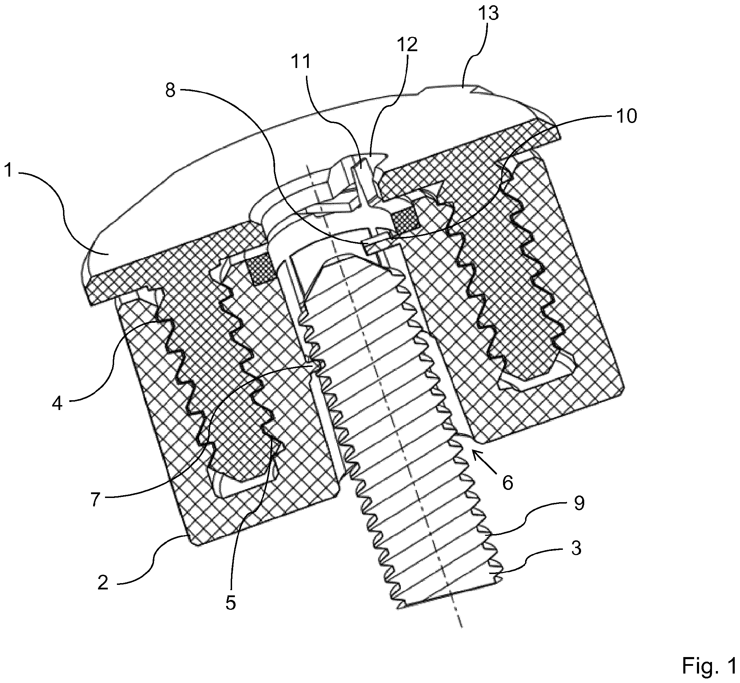

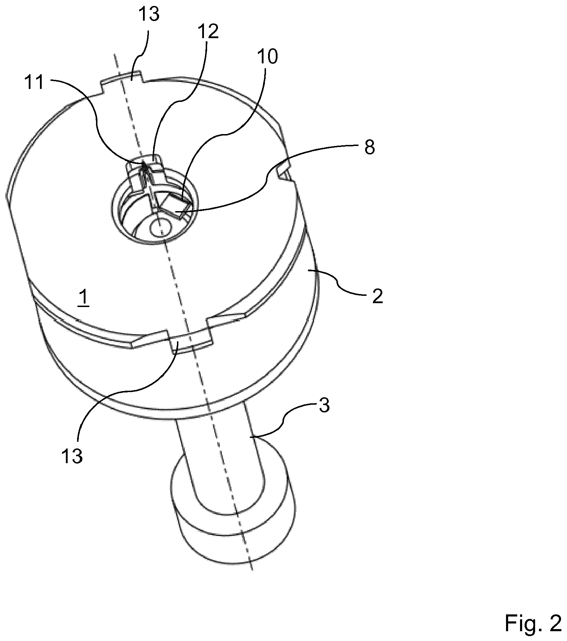

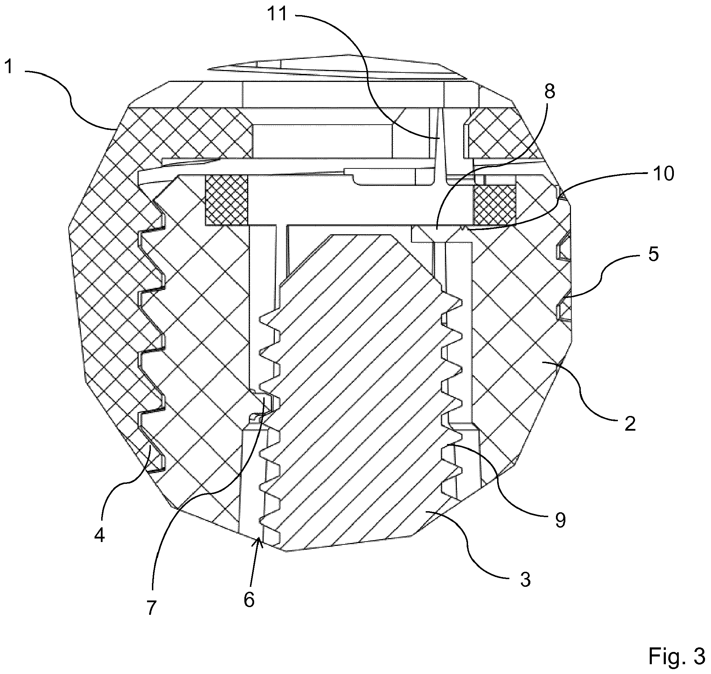

Die Figuren 1 bis 3 zeigen ein erstes Ausführungsbeispiel einer erfindungsgemäßen Vorrichtung. Die Vorrichtung umfasst eine erste Hülse 1 und zweite Hülse 2, in die eine Schraube 3 zumindest teilweise eingebracht ist. Zur Realisierung der Schraubverbindung weisen sowohl die erste Hülse 1 als auch die zweite Hülse 2 jeweils ein erstes Gewinde 4 und ein zweites Gewinde 5 auf. Folglich sind insgesamt zwei Gewindepaare realisiert, wobei je nach Anforderung auch drei oder mehr Gewindepaare angeordnet sein können.

Durch die Ausbildung von jeweils zwei Gewinden 4, 5, über welche die erste Hülse 1 mit der zweiten Hülse 2 verbindbar ist, werden die auf die Hülsen 1, 2 und somit auf die Gewinde 4, 5 wirkenden Kräfte und Drehmomente in idealer Weise verteilt. Dadurch ist die Vorrichtung insgesamt sehr kompakt und es ist möglich, die erste Hülse 1 und die zweite Hülse 2 aus einem Kunststoff herzustellen. Die Herstellung der ersten und zweiten Hülse 1, 2 kann beispielsweise im Spritzgussverfahren erfolgen. An dieser Stelle sei ausdrücklich darauf hingewiesen, dass die erste Hülse 1 und die zweite Hülse 2 jeweils auch lediglich ein einziges Gewinde aufweisen können.

In den Figuren 1 bis 3 ist des Weiteren dargestellt, dass in dem Durchgang 6 der zweiten Hülse 2 ein Gewindeelement 7 und ein Blockierungsmittel 8 ausgebildet sind. Das Gewindeelement 7 und das Blockierungsmittel 8 sind dabei als Nase bzw. Materialerhebung ausgestaltet. Das Gewindeelement 7 dient als Gegengewinde für das Gewinde 9 der Schraube 3. Wenn die Schraube 3 in den Durchgang 6 eingebracht wird, stößt sie gegen das Gewindeelement 7, lässt sich durch Drehen jedoch in Axialrichtung fortbewegen, bis sie an das Blockierungsmittel 8 stößt. Durch das weitere Eindrehen der Schraube 3 wird diese zwischen Gewindeelement 7 und Blockierungsmittel 8 fixiert und ist somit mit der zweiten Hülse 2 drehfest verbunden. Durch die Drehbewegung der Schraube 3 ist die zweite Hülse 2 aus der ersten Hülse 1 ausschraubbar. Dabei steigt das auf das Blockierungsmittel 8 wirkende Drehmoment bzw. die auf das Blockierungsmittel 8 wirkende Kraft an, sobald die miteinander zu verbindenden Bauteile durch die erste Hülse 1 und die zweite Hülse 2 verspannt werden. Das Blockierungsmittel 8 ist derart ausgestaltet, dass mit Erreichen der gewünschten Vorspannung das Blockierungsmittel 8 bricht und somit die Schraube 3 in Axialrichtung freigibt. Hierzu weist das Blockierungsmittel 8 eine Sollbruchstelle 10 auf, um nämlich eine definierte Zerstörung des Blockierungsmittels 8 zu gewährleisten.

In den Figuren 1 bis 3 ist des Weiteren die Verdrehsicherung 11 dargestellt, die in einer Ausnehmung 13 der ersten Hülse 1 hineinragt, so dass ein versehentliches Verdrehen der Hülsen 1, 2 gegeneinander verhindert ist. Die Verdrehsicherung 11 kann aus einem weichen, gummiartigen Material hergestellt sein, insbesondere im Spritzgussverfahren, beispielsweise im Zwei-Komponenten-Spritzguss. Die Verdrehsicherung 11 ist derart eingestellt, dass sie ein Verdrehen der Hülsen 1, 2 gegeneinander zulässt, wenn die durch die Mitnahmeeinrichtung an der zweiten Hülse 2 festgelegte Schraube 3 die Hülse 2 aus der Hülse 1 herausschraubt. Folglich dient die Verdrehsicherung 11 lediglich dazu, die Vorrichtung im gewünschten Soll-Lieferzustand zu halten. Im Soll-Lieferzustand ist die zweite Hülse 2 nahezu vollständig in die erste Hülse 1 eingeschraubt.

An dieser Stelle sei darauf hingewiesen, dass die erste Hülse 1 an einem ersten Schenkel eines Clips festgelegt sein kann, beispielsweise über die Vorsprünge 13. An dem zweiten Schenkel des Clips kann ein Haltemittel 15 angeordnet sein, beispielsweise eine Mutter. Zum Festlegen der Vorrichtung an einem nicht dargestellten Bauteil kann der Clip über das Bauteil geschoben werden, so dass die Durchgänge der Hülsen 1, 2 mit einer Ausnehmung in dem Bauteil fluchten. Durch die Durchgänge der Hülsen 1, 2 und das Bauteil wird eine Schraube 3 in das Gewinde des Haltemittels 15 eingeschraubt.

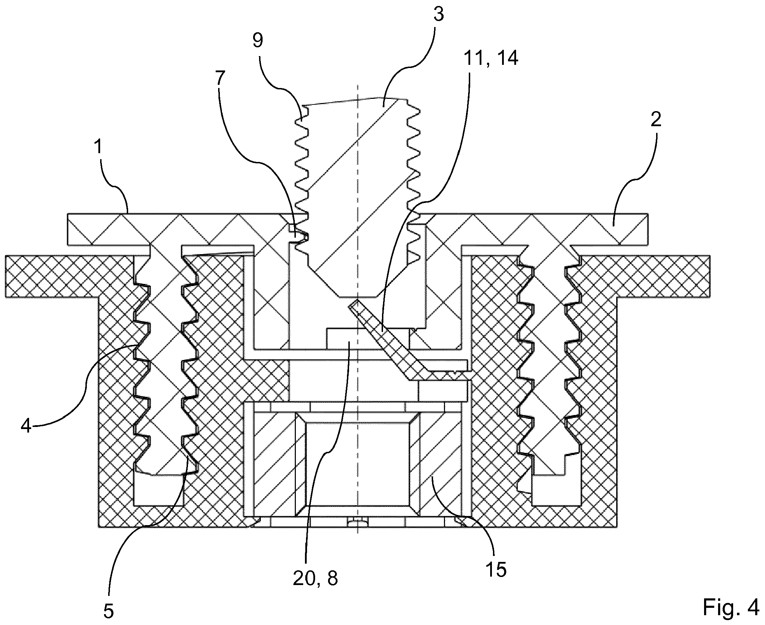

Figur 4 zeigt in einer schematischen, geschnittenen Darstellung ein weiteres Ausführungsbeispiel einer erfindungsgemäßen Vorrichtung. Dabei ist zwischen dem Gewindeelement 7 und dem Blockierungsmittel 8 ein Bruchelement 14 angeordnet, welches als Verdrehsicherung 11 wirkt. Dabei dient das Blockierungsmittel 8 zusätzlich als Widerlager 20 für das Bruchelement 14. Das Blockierungsmittel 8 ist gabelförmig ausgebildet, so dass es in beide Drehrichtungen sperrt. Wesentlich ist dabei, dass das Bruchelement 14 in Einstreckrichtung der Schraube 18 gesehen vor das Blockierungsmittel 8 hinausragt, so dass die Schraube 18 zunächst in Kontakt mit dem Bruchelement 14 kommt. Beim Einbringen der Schraube 3 in den Durchgang 6 der zweiten Hülse 2 stößt diese an das Gewindeelement 3 an und lässt sich durch Drehen in Axialrichtung fortbewegen, bis sie auf das Bruchelement 14 trifft. Durch eine weitere Drehbewegung der Schraube 3 wird eine Kraft bzw. ein Drehmoment auf das Bruchelement 14 ausgeübt, bis dieses bricht und somit ein Verdrehen der ersten Hülse 1 gegenüber der zweiten Hülse 2 möglich ist.

Des Weiteren ist in Figur 4 gezeigt, dass das Haltemittel 15 innerhalb der ersten Hülse 1 angeordnet ist, nämlich radial innerhalb der Gewinde 3, 4. Beispielsweise kann das Haltemittel 15 als Vierkantmutter oder Bundmutter realisiert sein, die axial in die erste Hülse 1 einsteckbar und durch Drehen hinter einem radialen Vorsprung verrastbar ist.

Zur Vermeidung von Wiederholungen sei des Weiteren auf die voranstehenden Ausführungen zu den Figuren 1 bis 3 verwiesen, die analog für Figur 4 gelten.

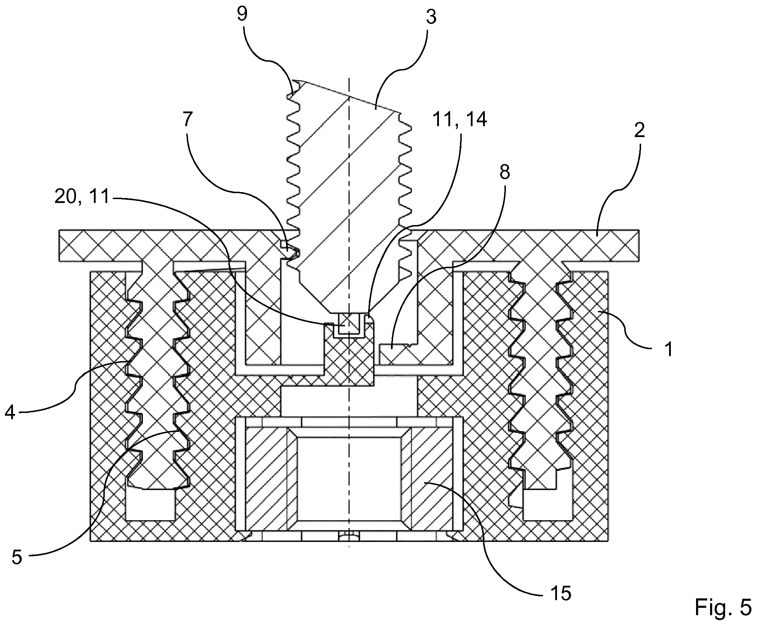

In Figur 5 ist ein weiteres Ausführungsbeispiel einer erfindungsgemäßen Vorrichtung in einer schematischen Darstellung gezeigt. Dabei weist das Bruchelement 14 zwei Erhebungen auf, zwischen welchen das Widerlager 20 angeordnet ist. Das Widerlager 20 ist als von der zweiten Hülse 2 in den Durchgang 6 hineinragende Nase ausgebildet. Entgegen dem Ausführungsbeispiel gemäß Figur 4 ist das Widerlager 20 ein separates Bauteil, so dass das Blockierungsmittel 8 ausschließlich als Teil der Mitnahmeeinrichtung wirkt. Um die durch das Bruchelement 14 realisierte Verdrehsicherung 11 zu lösen, drückt die Schraube 3 auf das Widerlager 20 und somit auch auf das Bruchelement 19, so dass diese abbrechen.

Des Weiteren wird zur Vermeidung von Wiederholungen auf die Beschreibung der Figuren 1 bis 4 verwiesen, die analog für Figur 5 gilt.

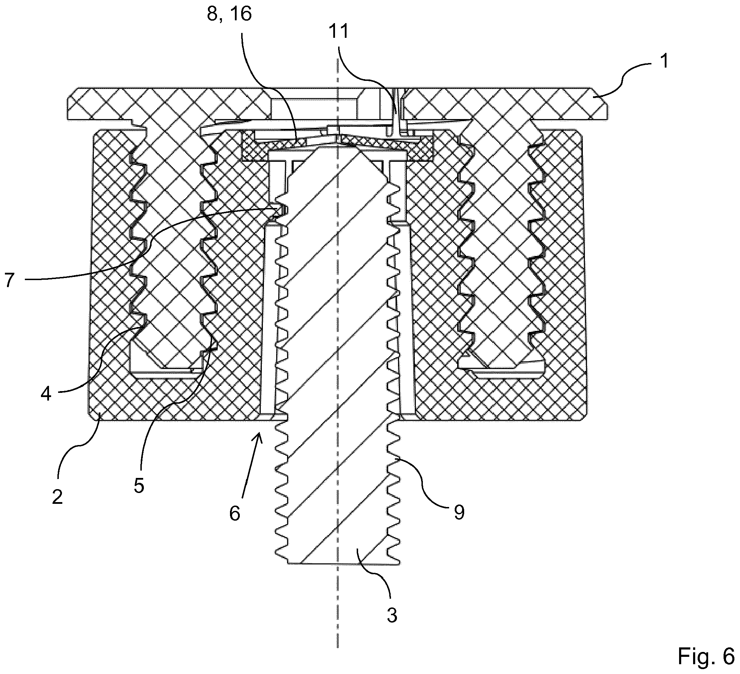

Figur 6 zeigt in einer schematischen, geschnittenen Darstellung einen Ausschnitt eines weiteren Ausführungsbeispiels eine erfindungsgemäße Vorrichtung. Das Ausführungsbeispiel gemäß Figur 5 entspricht dem Ausführungsbeispiel gemäß Figuren 1 bis 3, wobei das Blockierungsmittel 8 als Membrane 16 ausgebildet, die den Durchgang 7 der zweiten Hülse 2 nahezu vollständig verschließt. Dabei ist denkbar, dass die Membrane 16 einteilig mit der in den Figuren 1 bis 3 dargestellten Verdrehsicherung 11 ausgestaltet ist. Ansonsten entspricht die Konstruktion und Funktionsweise dieses Ausführungsbeispiels der bereits in den Figuren 1 bis 3 beschriebenen Vorrichtung, so dass auf diese verwiesen wird.

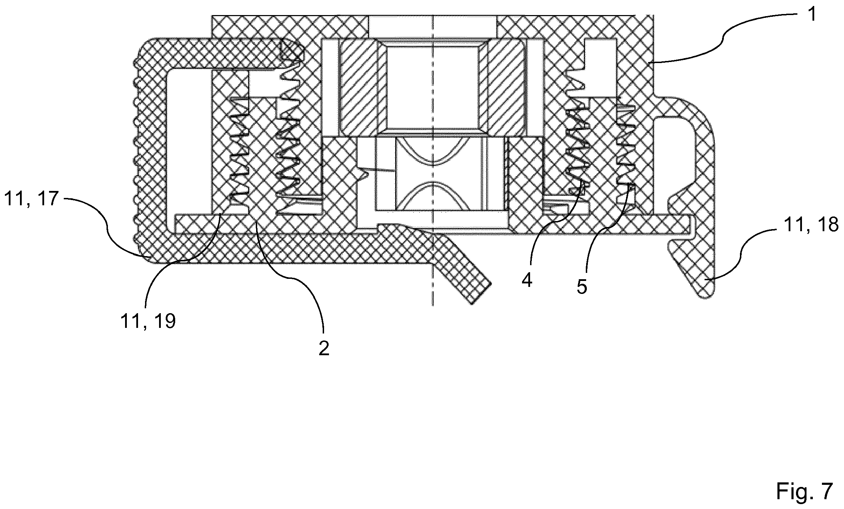

In Figur 7 sind in einer schematischen, geschnittenen Darstellung drei verschiedene Ausgestaltungen der Verdrehsicherung 11 einer erfindungsgemäßen Vorrichtung gezeigt. Dabei sei zunächst darauf hingewiesen, dass Figur 7 lediglich der Erläuterung der erfindungsgemäßen Verdrehsicherung 11 dient, so dass auf eine Beschreibung der weiteren Bauteile der Vorrichtung verzichtet wird.

Auf der linken Seite von Figur 7 ist eine Verdrehsicherung 11 als Klammer 17 ausgebildet, die in die erste Hülse 1 eingreift und die zweite Hülse 2 umschließt. Dabei ist deutlich zu erkennen, dass die Klammer 18 entfernt werden muss, bevor die Schraube 3 in den Durchgang 7 der zweiten Hülse 2 einbringbar ist.

Auf der rechten Seite von Figur 7 ist eine weitere Klammer 18 als Verdrehsicherung 11 dargestellt. Die Klammer 18 ist integraler Bestandteil der ersten Hülse 1 und umgreift die zweite Hülse 2. Um die Verdrehsicherung 11 zu lösen, ist die Klammer 19 von der zweiten Hülse 2 wegzubiegen bzw. von der ersten Hülse 1 abzubrechen. Dazu kann an der Klammer 18 zumindest eine Sollbruchstelle ausgebildet sein.

Des Weiteren kann die Verdrehsicherung 11 durch eine adhäsive Verbindung der ersten Hülse 1 mit der zweiten Hülse 2 realisiert sein. Dazu kann auf den sich gegenüberliegenden Flächen 20 der ersten Hülse 1 und der zweiten Hülse 2 ein Klebstoff aufgebracht sein, dessen Reib-/ Scherkräfte entsprechend eingestellt sind. Alternativ oder zusätzlich ist denkbar, dass der Klebstoff auf den Gewinden 4, 5 aufgebracht ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: erste Hülse
- 2: zweite Hülse
- 3: Schraube
- 4: erstes Gewinde
- 5: zweites Gewinde
- 6: Durchgang
- 7: Gewindeelement
- 8: Blockierungsmittel
- 9: Gewinde (Schraube)
- 10: Sollbruchstelle
- 11: Verdrehsicherung
- 12: Ausnehmung
- 13: Vorsprünge
- 14: Bruchelement
- 15: Haltemittel
- 16: Membrane
- 17: Klammer
- 18: Klammer
- 19: Fläche
- 20: Widerlager

## Patentansprüche

1. Vorrichtung zum Festlegen an einem Bauteil, insbesondere Toleranz-Ausgleichs-Element, mit einer ersten Hülse (1) und einer an und/oder in der ersten Hülse (1) mittels einer Schraubverbindung festlegbaren zweiten Hülse (2), wobei die erste Hülse (1) und die zweite Hülse (2) jeweils einen Durchgang (6) aufweisen, wobei eine Schraube (3) durch die Durchgänge (6) und vorzugsweise durch das Bauteil hindurch in ein Gewinde eines Haltemittels (15) einschraubbar ist, wobei sich die Drehrichtung der Schraubverbindung von der Drehrichtung des Gewindes des Haltemittels (15) unterscheidet und wobei an der zweiten Hülse (2) eine mit der Schraube (3) zusammenwirkende Mitnahmeeinrichtung ausgebildet ist,
**dadurch gekennzeichnet, dass** die Mitnahmeeinrichtung durch mindestens ein in den Durchgang (6) hineinragendes Gewindeelement (7) und mindestens ein, vorzugsweise in Axialrichtung dazu versetzt angeordnetes, sich in den Durchgang (6) erstreckendes Blockierungsmittel (8) realisiert ist.

2. Vorrichtung nach Anspruch 1, **dadurch gekennzeichnet, dass** das Gewindeelement (7) als Gegengewinde für das Gewinde (9) der Schraube (3) ausgebildet ist.

3. Vorrichtung nach Anspruch 1 oder 2, **dadurch gekennzeichnet, dass** das Gewindeelement (7) als Nase bzw. Materialerhebung in und/oder an dem Durchgang (6) der zweiten Hülse (2) realisiert ist.

4. Vorrichtung nach einem der Ansprüche 1 bis 3, **dadurch gekennzeichnet, dass** das Blockierungsmittel (8) derart weit in den Durchgang (6) hineinragt, dass die in den Durchgang (6) eingebrachte Schraube (3) radial und/oder axial an das Blockierungsmittel (8) anstößt und dieses bei Erreichen einer definierbaren Kraft seine Sperrrung aufgibt.

5. Vorrichtung nach einem der Ansprüche 1 bis 4, **dadurch gekennzeichnet, dass** das Blockierungsmittel (8) als Nase bzw. Materialerhebung in und/oder an dem Durchgang (6) der zweiten Hülse (2) realisiert ist.

6. Vorrichtung nach einem der Ansprüche 1 bis 4, **dadurch gekennzeichnet, dass** das Blockierungsmittel (8) als den Durchgang (6) verschließende Membrane (16) ausgebildet ist.

7. Vorrichtung nach einem der Ansprüche 1 bis 6, **dadurch gekennzeichnet, dass** das Blockierungsmittel (8) zumindest eine Sollbruchstelle (10) aufweist.

8. Vorrichtung nach einem der Ansprüche 1 bis 7, **dadurch gekennzeichnet, dass** mehrere Gewindeelemente (7) und/oder Blockierungsmittel (8) ausgebildet sind.

9. Vorrichtung nach einem der Ansprüche 1 bis 8, **dadurch gekennzeichnet, dass** eine zwischen der ersten Hülse (1) und der zweiten Hülse (2) wirkende Verdrehsicherung (11) angeordnet ist.

10. Vorrichtung nach Anspruch 9, **dadurch gekennzeichnet, dass** an der ersten Hülse (1) ein sich in den Durchgang (6) erstreckendes Bruchelement (14), bspw. eine Nase bzw. eine Materialerhebung, ausgebildet ist und dass das Bruchelement (14) zumindest einen Teil der Verdrehsicherung (12) bildet.

11. Vorrichtung nach Anspruch 10, **dadurch gekennzeichnet, dass** das Bruchelement (14) zumindest eine Sollbruchstelle aufweist.

12. Vorrichtung nach Anspruch 9, **dadurch gekennzeichnet, dass** die Verdrehsicherung (11) als Klammer (17, 18) ausgebildet ist, wobei die Klammer (17, 18) die erste Hülse (1) und/oder die zweite Hülse (2) umgreift und/oder in die erste Hülse (1) und/oder in die zweite Hülse (2) eingreift.

13. Vorrichtung nach Anspruch 9, **dadurch gekennzeichnet, dass** die erste Hülse (1) und die zweite Hülse (2) adhäsiv, insbesondere über einen Klebstoff, oder über eine Klemmsicherung, insbesondere aus Gummi, miteinander verbunden sind, um die Verdrehsicherung (11) zu realisieren.
